# EUROPEAN PATENT SPECIFICATION

(11) **EP 3 112 840 B1**
(45) Date of publication and mention of the grant of the patent: **05.12.2018**
(21) Application number: 15174649.2
(22) Date of filing: 30.06.2015
(51) Int. Cl.: G01N 1/10, B64C 39/02, G01N 1/22

(54) **UNMANNED AERIAL VEHICLE FOR COLLECTING SAMPLES FROM THE SURFACE OF WATER**
UNBEMANNTES LUFTFAHRZEUG FÜR PROBENENTNAHME AN EINER WASSEROBERFLÄCHE
VÉHICULE AÉRIEN SANS PILOTE POUR ECHANTILLONNAGE A LA SURFACE DE L'EAU

(43) Date of publication of application: 04.01.2017
(73) Proprietor: Rigas Tehniska Universitate, 1658 Riga (LV)
(72) Inventor: Urbahs, Aleksandrs, LV-1029 R ga (LV); Zavtkevics, Vladislavs, LV-1084 R ga (LV)
(74) Representative: Anohins, Vladimirs

(56) References cited:
- US-A1- 2013 292 512
- US-B1- 6 237 430
- SCHWARZBACH MARC ET AL: "Remote water sampling using flying robots", 2014 INTERNATIONAL CONFERENCE ON UNMANNED AIRCRAFT SYSTEMS (ICUAS), IEEE, 27 May 2014 (2014-05-27), pages 72-76, XP032610537, DOI: 10.1109/ICUAS.2014.6842240 [retrieved on 2014-06-23]

## Description

### FIELD OF THE INVENTION

The invention relates to methods and devices for the oil pollution control of both sea aquatorium and inland waters. The method and device according to the invention provides a water surface sampling to analyze collected samples for the presence of oil contaminants in a defined water aquatorium, the method includes taking a water surface sample; preparing the sample for transportation; and delivering the sample to a point of destination by means of an unmanned aerial vehicle (UAV).

### BACKGROUND OF THE INVENTION

There is known in the art a method for water sampling to analyze the level of contamination (Chinese patent application CN102407925 A "Unmanned water sample sampling boat").

The method described in the above application provides for water sampling using an unmanned water craft (boat).

A sampling device is installed on an extendable tube in the stern part of the boat. The tube is equipped with a pullout pump, a sampling pipe, three sampling vials, a positioning element, and a float. The sampling vials are connected to the pump through the sampling pipe, drain valves and a valve manifold in the inlet tube of the pump. The sampling vials are positioned on depth by means of the float. A device for distributing and storing the water samples is provided in the forward part of the boat. This device comprises a drain valve and a manifold with solenoid valves of manifold assembly.

This known technology has serious disadvantages. First, in taking samples from oil spills the components of the device become dirtied with oil grease or oil film. These components are not allowed to be re-used. Therefore, the components of the device require cleaning with chemical agents after each mission. Second, this device cannot be used for taking samples in the areas of oil spills and the areas with thin oil films (colored "sheens" are observable). Oil spills on water surface as a shapeless spot. The thickness of the oil film may be no more than several microns and varies in time. A low speed and short range of an unmanned water craft substantially preclude from an adequate rapid monitoring of large areas of sea aquatorium.

US2013292512 A1 describes a method for water sampling in order to analyze the contamination level.

This method provides for water sampling and analyzing the contamination level using a UAV. Collecting samples and contacting them with a sensor installed onboard the UAV is performed by a fluid flow through an annular ventilation channel in the air cowl of the UAV body, the flow being generated by a rotor fan. The fluid samples may be collected also by a flexible tube connected to the outer surface of the air cowl of the UAV body. The flexible tube is connected to the body of the sensor and may allow to collect samples of dust and moisture and other materials from the ground.

This known technology has serious disadvantages.

First, in taking samples from oil spills, the components of the device become dirtied with oil grease or oil film. These components are not allowed to be immediately re-used. Therefore, the components of the device require cleaning with chemical solvents after each mission. Second, this device cannot be used for taking samples in the areas of oil spills and the areas with thin oil films (colored "sheens" are observable).

Furthermore, the UAV described in this application is operable only in a narrow range of weather conditions, particularly, at a wind velocity under 7 m/s, which is not suitable when working on the open sea.

Another device is described in RU71628 (a Russian utility model patent).

According to this utility model, water sampling is performed using a vertical take-off and landing remote controlled UAV fitted with a special equipment such as a small-scale lifter winch controlled from an on-ground remote control and observation station, the free end of a winch cable being connected to a sampler. Sampling being completed, the UAV transports the samples as an external load to a destination point for analyzing.

A great disadvantage of this technology is that it does not provide for isolating and sealing the sample of water contaminated with oil or other pollutant, immediately after the sample has been taken, and the collected samples cannot be used for analyzing them according to IMO standards and in compliance with the Bonn Convention. Further, although this device allows taking water samples from different depths, still it cannot be used to sample water with thin oil films (colored "sheens" are observable).

SCHWARZBACH MARC ET AL: "Remote water sampling using flying robots:, 2014 INTERNATIONAL CONFERENCE ON UNMANNED AIRCRAFT SYSTEMS (ICUAS), IEEE, 27 May 2014 (2014-05-27), pages 72-76, XP032610537 discloses a device for collecting water samples using flying robots. The article discuss various method of collecting water samples including a container lowered into the water to be filled using a winch to lower the container from a position close to the helicopter into the water for sampling. That technology does not provide for sampling from the water surface, i.e. for collecting sheen samples. It also does not provide for isolating and sealing the sample, immediately after the sample has been taken

US 6 237 430 B1 (KHATIB ZARA IBRAHIM [NL] ET AL) 29 May 2001 discloses a method for collecting sheen samples from open water using a collection device or sampler that comprises an absorbent that floats on the water, thereby absorbing the components of the sheen upon contact. The absorbed may be wound into a castable shape, attached to the line and thrown into water. The sampler is then retrieved, placed in a sample jar and sent for analysis. That method is no suitable for automated sampling, as it requires an operator for throwing the sampler, retrieving it and placing it in a sample jar.

The object of the present invention is providing a device and method for UAV-aided collecting samples from the surface of water free from the above disadvantages of the prior art.

### BRIEF DESCRIPTION OF THE INVENTION

The object of the invention is achieved by providing a device for collecting samples from the surface of water to be analyzed for oil contamination of an area of water, according to claims 1 and 2.

The container with positive buoyancy provides for taking a sample from water surface in any sea state.

The UAV is further equipped with means for sealing the collected sample. Said sealing means enable transporting the sample without a storage box and prevent the sample from contamination.

The sealing of a collected sample is performed using one or more shutters installed on the UAV and adapted to sealing the container of the sampler or inserting it into a sealable compartment arranged in the UAV and sealing the compartment by said shutter(s). Preferably, the shutters are pivotally connected to the UAV. Such a solution provides a high reliability and high execution speed of a shutting mechanism protecting the compartment from atmospheric precipitation. Also, this solution provides the improvement of aerodynamic characteristics of the UAV and a safe-keeping and integrity of the sample in case of emergency landing.

Desirably, the shutters have fluoropolymeric sealing gaskets. Such gaskets provide a high degree of protection from moisture. Also, such gaskets advantageously provide a positive action of the shutting mechanism, when even slightly affected.

Preferably, the container of the sampler is made in the form of a sealed capsule with a window in its lower part. Such a solution makes the structure of the UAV simple and guarantees a high strength of the container and its high resilience to external impacts.

Favorably, the container of the sampler is made of plastic and additionally equipped with a metal net to place the fluoropolymeric fine-meshed screen thereon. Such a solution provides a high humidity resistance, a high resistance against aggressive environments, and a light weight of the sampler. Said metal net makes the structure harder and allows replacing the fluoropolymeric fine-meshed screen in a simple and quick manner.

Another object of the invention is to provide a method for collecting samples from the surface of water, for analyzing oil contamination, according to claim 8.

The collected sample is sealed by sealing the container of the sampler by one or more shutters installed on the UAV. Alternatively, the collected sample is sealed by placing the container of the sampler in a sealable compartment of the UAV, said compartment being sealed by one or more shutters installed on the UAV.

Preferably, said shutters have fluoropolymeric sealing gaskets.

### BRIEF DESCRIPTION OF THE FIGURE

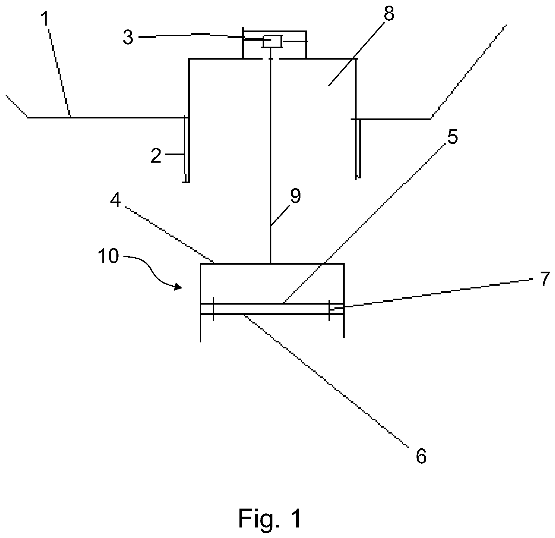

Fig. 1 schematically shows the arrangement of the device according to the invention.

### DETAILED DESCRIPTION OF EMBODIMENTS

The device schematically shown in Fig. 1 comprises a vertical take-off and landing unmanned aerial vehicle (UAV) 1 equipped with a sampler 10 comprising a plastic container with positive buoyancy 4. The container 4 is made as a bottomless box structure. The container 4 is equipped with a metal net 5 and a fluoropolymeric fine-meshed screen 6. The metal net 5 is fixed within the container 4 and equipped with fixing elements 7 for fixing the fluoropolymeric fine-meshed screen 6 thereon. Said screen 6 is meant for taking samples from a water surface and is selected from a special sampling kit, it may be, e.g., a high-porous fluorocarbon polymeric net structure with a mesh size of 70 micron developed with the participation of the USCG.

Descending the container 4 onto a water surface and ascending thereof, upon collecting a sample, aboard the UAV 1 is performed by a small-scale lifter winch 3 and a lifting wire rope 9 attached to the container 4 in the upper part of the latter.

Once the container 4 is ascended and taken aboard, it is placed in a sealable compartment 8. The UAV 1 may have several sealable compartments 8 to accommodate several containers 4.

The compartment 8 is sealed with shutters 2 closable automatically or by remote control. The shutters 2 have fluoropolymeric sealing gaskets.

To seal collected samples, a separate sealable compartment 8 may be used configured to receive the sampler 10, so that upon ascending sampler 10 aboard the UAV it is isolated within the compartment 8 which is then sealed by one or more shutters 2 pressed to the lower part of the compartment and closing it.

Shutting/unshutting of each shutter 2 is performed separately by a respective stepping micromotor through a gear set. Said micromotors open the shutters 2 in response to a signal from an electronic control module (ECM). The shutters 2 are rectangular. The shutters 2 are sealed to the body of the UAV 1 by fluoropolymeric gaskets. Once a collected sample in the container 4 is placed within the body of the UAV 1, the ECM generates a command and supplies power to the stepping micromotors, which close the shutters 2 thus isolating container 4 within the sealed compartment 8.

Sealing the container 4 by shutters 2 fixed on the body of the UAV 1 allows to avoid the contamination of samples in case of sampling oil films. Sealing such samples by shutters provided on the container 4 would complicate the structure of the container 4 and make it less reliable.

The method according to the invention is performed as follows. A UAV 1 is sent to a sampling zone, GPS coordinates of which are known. On the arrival of the UAV 1 in the zone, an ECM generates a command to open shutters 2 of a sealable compartment 8 of the UAV 1. Once the shutters 2 are open, the ECM commands a small-scale lifter winch 3 to descend the container 4. As soon as the container 4 touched the water surface, the ECM commands said winch 3 to lift the container 4 with a collected sample therewithin. Once the container 4 is aboard the UAV 1, the ECM generates a commands to stop rotating the drum of the winch 3, and to close the shutters 2 of the compartment 8, thus sealing the latter.

The container with positive buoyancy 4 allows taking samples from water surface in any sea state. Taking and transporting samples are performed automatically. As soon as the UAV 1 landed, e.g., ashore or onboard a ship, the container 4 is delivered to a laboratory where the collected samples are analyzed. If it is necessary to have samples from different points of the zone, several autonomous container modules may be installed in the sealable compartment of the UAV.

## Claims

1. A device for collecting samples from the surface of water in order to analyze the presence of oil contaminants in a defined water aquatorium, the device comprising a vertical take-off and landing unmanned aerial vehicle (1) equipped with a sampler (10) configured to be moved by a small-scale lifter winch (3), **characterized in that** the sampler (10) comprises a container (4) with positive buoyancy and is equipped with a fluoropolymeric fine-meshed screen (6) for taking samples from water surface, wherein said unmanned aerial vehicle (1) is further equipped with means for sealing a collected sample, wherein said means for sealing comprise a shutter (2) installed on the unmanned aerial vehicle (1) adapted to seal the container (4) of the sampler (10).

2. A device for collecting samples from the surface of water in order to analyze the presence of oil contaminants in a defined water aquatorium, the device comprising a vertical take-off and landing unmanned aerial vehicle (1) equipped with a sampler (10) configured to be moved by a small-scale lifter winch (3), **characterized in that** the sampler (10) comprises a container (4) with positive buoyancy and is equipped with a fluoropolymeric fine-meshed screen (6) for taking samples from water surface, wherein said unmanned aerial vehicle (1) is further equipped with means for sealing a collected sample, wherein said means for sealing comprise a sealable compartment (8) arranged on the unmanned aerial vehicle (1), said compartment (8) being adapted to receiving the container (4) of the sampler (10), wherein said means for sealing further comprise a shutter (2) installed on the unmanned aerial vehicle (1), said shutter (2) being adapted to seal said sealable compartment (8) upon receiving the container (4) of the sampler (10) therewithin.

3. The device according to claim 1 or 2, wherein the shutter (2) has a fluoropolymeric sealing gasket.

4. The device according to any of claims 1 to 3, wherein the shutter (2) is pivotally connected to the unmanned aerial vehicle (1).

5. The device according to any of claims 1 to 4, wherein the container (4) of the sampler (10) is made in the form of a sealed capsule with a window in its lower part.

6. The device according to any of claims 1 to 5, wherein the container (4) of the sampler (10) is made of plastic.

7. The device according to claim 6, wherein the container (4) of the sampler (10) is additionally equipped with a metal net (5) to place the fluoropolymeric fine-meshed screen (6) thereon.

8. A method for collecting samples from the surface of water, for analyzing oil contamination, the method using a vertical take-off and landing unmanned aerial vehicle (1) equipped with: a sampler (10) comprising a container with positive buoyancy (4) equipped with a fluoropolymeric fine-meshed screen (6); a small-scale lifter winch (3) to move the sampler (10), and a shutter (2) installed on the unmanned aerial vehicle (1), the method comprising the steps of:
descending the sampler (10) onto the surface of the water aquatorium;
collecting a sample;
ascending the sampler (10) up to the unmanned aerial vehicle (1) and taking it aboard; and
sealing the collected sample when it is aboard by sealing the container (4) by the shutter (2) or by placing the sampler (10) within a sealable compartment (8) of the unmanned aerial vehicle (1) and sealing the compartment (8) by the shutter (2).

## Patentansprüche

1. Eine Einrichtung zur Probeentnahme auf der Wasseroberfläche, um Ölverschmutzungen in einem definierten Aquatorium zu analysieren, die Einrichtung, aus einer vertikal abhebenden und landenden Drohne (1) bestehend, die mit einem Probenehmer (10) ausgerüstet wird, der so ausgeführt wird, dass er mit einer kleinmaßstäblichen Hebewinde (3) bewegt wird, **dadurch gekennzeichnet, dass** der Probenehmer (10) über einen Behälter (4) mit positiver Auftriebskraft verfügt und mit einem feinmaschigen Fluorpolymerbildschirm (6) zur Probeentnahme auf der Wasseroberfläche ausgestattet wird, wobei die besagte Drohne (1) ferner mit Mitteln zum Verschließen der entnommenen Probe ausgerüstet wird, wobei die besagten Mittel zum Verschließen einen Schließer (2) beinhalten, der an der Drohne (1) befestigt wird, die zum Verschließen des Behälters (4) des Probenehmers (10) angepasst wird.

2. Eine Einrichtung zur Probeentnahme auf der Wasseroberfläche, um Ölverschmutzungen in einem definierten Aquatorium zu analysieren, die Einrichtung, aus einer vertikal abhebenden und landenden Drohne (1) bestehend, die mit einem Probenehmer (10) ausgerüstet wird, der so ausgeführt wird, dass er mit einer kleinmaßstäblichen Hebewinde (3) bewegt wird, **dadurch gekennzeichnet, dass** der Probenehmer (10) über einen Behälter (4) mit positiver Auftriebskraft verfügt und mit einem feinmaschigen Fluorpolymerbildschirm (6) zur Probeentnahme auf der Wasseroberfläche ausgestattet wird, wobei die besagte Drohne (1) ferner mit Mitteln zum Verschließen der entnommenen Probe ausgerüstet wird, wobei die besagten Mittel zum Verschließen über ein verschließbares Fach (8) verfügen, das sich an der Drohne (1) befindet, wobei das besagte Fach (8) angepasst wird, um den Behälter (4) des Probenehmers (10) aufzunehmen, wobei die besagten Mittel zum Verschließen ferner über einen Schließer (2) verfügen, der an der Drohne (1) befestigt wird, der besagte Schließer (2) wird angepasst, um das besagte verschließbare Fach (8) nach der Aufnahme des Behälters (4) des Probenehmers (10) im Fach zu verschließen.

3. Die Einrichtung nach Anspruch 1 oder 2, wobei der Schließer (2) eine Fluorpolymerdichtung hat.

4. Die Einrichtung nach einem der Ansprüche 1 bis 3, wobei der Schließer (2) mit der Drohne (1) zentral verbunden wird.

5. Die Einrichtung nach einem der Ansprüche 1 bis 4, wobei der Behälter (4) des Probenehmers (10) in der Form einer verschlossenen Kapsel mit einem Fenster in ihrem unteren Teil hergestellt wird.

6. Die Einrichtung nach einem der Ansprüche 1 bis 5, wobei der Behälter (4) des Probenehmers (10) aus Kunststoff hergestellt wird.

7. Die Einrichtung nach Anspruch 6, wobei der Behälter (4) des Probenehmers (10) zusätzlich mit einem Metallnetz (5) ausgestattet wird, um dort den feinmaschigen Fluorpolymerbildschirm (6) anzubringen.

8. Ein Verfahren der Probeentnahme auf der Wasseroberfläche zur Analyse der Ölverschmutzung, das Verfahren, bei dem eine vertikal abhebende und landende Drohne (1) eingesetzt wird, die folgende Bestandteile umfasst: einen Probenehmer (10) mit einem Behälter mit positiver Auftriebskraft (4), der über einen feinmaschigen Fluorpolymerbildschirm (6) verfügt; eine kleinmaßstäbliche Hebewinde (3) zum Bewegen des Probenehmers (10) und einen Schließer (2), der an der Drohne (1) befestigt wird, das Verfahren, das in den folgenden Schritten läuft:
Setzen des Probenehmers (10) auf die Wasseroberfläche des Aquatoriums;
Probeentnahme;
Heben des Probenehmers (10) zur Drohne (1) und seine Unterbringung an Bord der Drohne; und
Verschließen der entnommenen Probe, sobald sie an Bord der Drohne ist, indem der Behälter (4) durch den Schließer (2) oder der Probenehmer (10) in einem verschließbaren Fach (8) der Drohne (1) untergebracht und das Fach (8) durch den Schließer (2) verschlossen wird.

## Revendications

1. Un dispositif pour le recueil des échantillons de la surface d'eau en vue d'analyser la présence de contaminants d'hydrocarbures dans un aquarium d'eau défini, le dispositif comprenant un véhicule aérien sans pilote à décollage et atterrissage verticaux (1) équipé d'un échantillonneur (10) configuré pour être déplacé par un treuil élévateur à petit échelle (3), **caractérisé en ce que** l'échantillonneur (10) comprend un conteneur (4) avec flottabilité positive et est équipé d'un écran à mailles fines fluoropolymère (6) pour récupérer les échantillons de la surface d'eau, où ledit véhicule aérien sans pilote (1) est également équipé de dispositifs d'étanchéité d'échantillon recueilli, où lesdits dispositifs d'étanchéité comprennent un volet (2) installé sur le véhicule aérien sans pilote (1) adapté pour sceller le conteneur (4) de l'échantillonneur (10).

2. Un dispositif pour le recueil des échantillons de la surface d'eau en vue d'analyser la présence de contaminants d'hydrocarbures dans un aquarium d'eau défini, le dispositif comprenant un véhicule aérien sans pilote à décollage et atterrissage verticaux (1) équipé d'un échantillonneur (10) configuré pour être déplacé par un treuil élévateur à petit échelle (3), **caractérisé en ce que** l'échantillonneur (10) comprend un conteneur (4) avec flottabilité positive et est équipé d'un écran à mailles fines fluoropolymère (6) pour récupérer les échantillons de la surface d'eau, où ledit véhicule aérien sans pilote (1) est également équipé de dispositifs d'étanchéité d'échantillon recueilli, où lesdits dispositifs d'étanchéité comprennent un compartiment hermétique (8) disposé sur le véhicule aérien sans pilote (1), ledit compartiment (8) étant adapté pour recevoir le conteneur (4) de l'échantillonneur (10), où lesdits dispositifs d'étanchéité comprennent un volet (2) installé sur le véhicule aérien sans pilote (1), ledit volet (2) étant adapté pour sceller ledit compartiment hermétique (8) à la réception du conteneur (4) de l'échantillonneur (10) à l'intérieur.

3. Le dispositif selon la revendication 1 ou 2, où le volet (2) dispose d'un joint d'étanchéité fluoropolymère.

4. Le dispositif selon l'une des revendications 1 à 3, où le volet (2) est relié, de manière à pouvoir pivoter, au véhicule aérien sans pilote (1).

5. Le dispositif selon l'une des revendications 1 à 4, où le conteneur (4) de l'échantillonneur (10) est fabriqué en forme de capsule scellée avec une fenêtre dans sa partie inférieure.

6. Le dispositif selon l'une des revendications 1 à 5, où le conteneur (4) de l'échantillonneur (10) est fabriqué en plastique.

7. Le dispositif selon la revendication 6, où le conteneur (4) de l'échantillonneur (10) est également équipé d'un filet métallique (5) pour y placer l'écran à fines mailles fluoropolymère (6).

8. Une méthode pour recueillir les échantillons de la surface d'eau, pour analyser la contamination d'hydrocarbures, la méthode employant un véhicule aérien sans pilote à décollage et atterrissage verticaux (1) équipé d'un échantillonneur (10) comprenant un conteneur avec flottabilité positive (4) équipé d'un écran à fines mailles fluoropolymère (6) ; d'un treuil élévateur à petite échelle (3) pour déplacer l'échantillonneur (10), et d'un volet (2) installé sur le véhicule aérien sans pilote (1), la méthode comprenant les étapes de :
descente de l'échantillonneur (10) sur la surface de l'aquarium d'eau ;
recueil d'un échantillon ;
montée de l'échantillonneur (10) jusqu'au véhicule aérien sans pilote (1) et sa prise à bord ;
et le scellage de l'échantillon recueilli quand il est à bord en scellant le conteneur (4) par le volet (2) ou en plaçant l'échantillonneur (10) dans un compartiment hermétique (8) du véhicule aérien sans pilote (1), et en scellant le compartiment (8) par le volet (2).
